# EUROPÄISCHE PATENTSCHRIFT

(11) **EP 2 839 078 B1**
(45) Veröffentlichungstag und Bekanntmachung des Hinweises auf die Patenterteilung: **06.07.2016**
(21) Anmeldenummer: 13712683.5
(22) Anmeldetag: 15.03.2013
(51) Int. Cl.: E01B 27/17, E01B 35/00

(54) **MASCHINE ZUR INSTANDHALTUNG EINES GLEISES**
MACHINE FOR MAINTAINING A TRACK
MACHINE POUR L'ENTRETIEN D'UNE VOIE FERRÉE

(30) Priorität: 11.04.2012 AT 4262012
(43) Veröffentlichungstag der Anmeldung: 25.02.2015
(73) Patentinhaber: Franz Plasser Bahnbaumaschinen-Industriegesellschaft m.b.H., 1010 Wien (AT)
(72) Erfinder: OBERLECHNER, Günther, Virginia Beach, VA 23454 (US)
(86) Internationale Anmeldenummer: PCT/EP2013/000790
(87) Internationale Veröffentlichungsnummer: WO 2013/152827

(56) Entgegenhaltungen:
- EP-A1- 0 722 013
- WO-A1-2005/103385
- DE-A1- 3 121 836
- GB-A- 2 268 021

## Beschreibung

Die Erfindung betrifft eine Maschine gemäß den im Oberbegriff von Anspruch 1 angeführten Merkmalen.

Bei derartigen Maschinen wird infolge der Entfernung des Schotterbettes die Gleis - Istlage zur Gänze aufgelöst. Es ist deshalb von Vorteil, diese vor der Zerstörung abzutasten und die Lagedaten zeitverzögert zur Wiederherstellung der neuen Gleislage zur Verfügung zu stellen. Derartige Maschinen sind beispielsweise durch US 4 432 284, GB 2 268 529, GB 2 268 021 und US 7 181 851 bekannt. EP 0722 013 A1 beschreibt eine Schotterbettreinigungsmaschine deren Abtasteinrichtungen als zur Positionsbestimmung in einem globalen Navigationssatellitensystem geeignete Signalempfänger ausgebildet sind.

Die Aufgabe der vorliegenden Erfindung liegt nun in der Schaffung einer Maschine der eingangs genannten Art, mit der die Genauigkeit und Dauerhaftigkeit für die Wiederherstellung der ursprünglichen Gleislage optimierbar ist.

Diese Aufgabe wird erfindungsgemäß mit einer gattungsgemäßen Maschine durch die im Kennzeichen von Anspruch 1 bzw. 7 angeführten Merkmale gelöst.

Mit einer derartigen Ausbildung kann problemlos eine genaue Abtastung und Wiederherstellung der Gleislage sowohl hinsichtlich der Höhen- als auch Seitenposition durchgeführt werden, wobei sich der konstruktive Aufwand auf ein Minimum beschränken lässt. Folglich ist auch eine nachträgliche Umrüstung einer Maschine einfach zu bewerkstelligen. Durch Einbeziehung des globalen Navigationssatellitensystems kann dabei auch die absolute Gleisposition berücksichtigt werden. Da im Rahmen der nachfolgenden Gleisunterstopfung zur Herstellung einer abschließenden exakten Gleislage nur mehr geringfügige Lagekorrekturen erforderlich sind, kann die Dauerhaftigkeit der Lage des neu unterstopften Gleises verlängert werden.

Weitere Vorteile der Erfindung ergeben sich aus den Unteransprüchen und der Zeichnungsbeschreibung.

Im Folgenden wird die Erfindung anhand von in der Zeichnung dargestellten Ausführungsbeispielen näher beschrieben. Es zeigen:

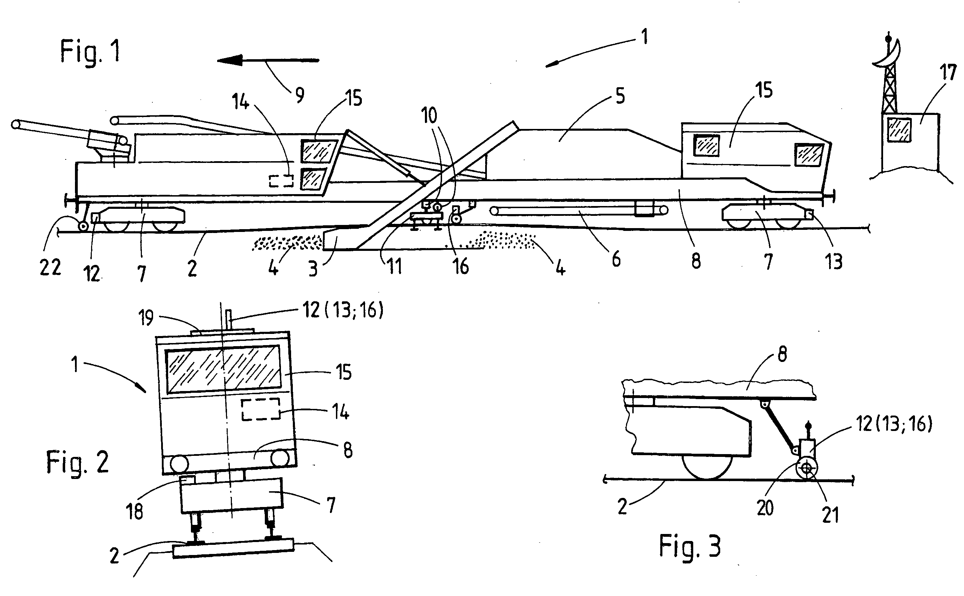

Fig.1 eine vereinfachte Seitenansicht einer Maschine zum Reinigen von Schotter eines Gleises, Fig. 2 eine Ansicht der Maschine in Maschinenlängsrichtung, und Fig. 3 eine vereinfachte Darstellung einer Abtasteinheit zum Abtasten eines Gleises.

Eine in Fig. 1 ersichtliche Maschine 1 ist zur Instandhaltung eines Gleises 2 mit einer Aufnahmevorrichtung 3 zur Aufnahme von unterhalb des Gleises 2 gelegenem Schotter 4 ausgestattet. Diese Aufnahmevorrichtung 3 ist hier als endlose, um das Gleis herumgeführte Räumkette ausgebildet. Prinzipiell kann die Aufnahmevorrichtung 3 aber natürlich auch in anderer Form, beispielsweise als sogenannter Undercutter oder als Schaufelrad, ausgebildet sein.

Der durch die Aufnahmevorrichtung 3 aufgenommene Schotter 4 wird einer Siebanlage 5 zur Reinigung zugeführt und danach über ein Abwurfförderband 6 auf das Gleis 2 abgeworfen. Die Maschine 1 weist einen auf Schienenfahrwerken 7 abstützbaren Maschinenrahmen 8 auf und ist im Arbeitseinsatz kontinuierlich in einer Arbeitsrichtung 9 verfahrbar. Unmittelbar hinter der Aufnahmevorrichtung 3 ist eine mit dem Maschinenrahmen 8 verbundene und durch Antriebe 10 höhen- und querverstellbare Gleishebeeinrichtung 11 zum Anheben des Gleises 2 vorgesehen.

Bezüglich der Arbeitsrichtung 9 vor der Aufnahmevorrichtung 3 ist ein mit dem vorderen Schienenfahrwerk 7 verbundener - zur Positionsbestimmung in einem globalen Navigationssatellitensystem geeigneter - erster Signalempfänger 12 zum Abtasten einer Gleis - Istlage vorgesehen.

Mit dem hinteren Schienenfahrwerk 7 ist ein - zur Positionsbestimmung in einem globalen Navigationssatellitensystem geeigneter - zweiter Signalempfänger 13 zum Abtasten einer - unter Ablage des angehobenen Gleises 2 auf den wieder eingebrachten Schotter 4 geschaffenen - Gleisneulage verbunden. Beiden Signalempfängern 12, 13 ist eine Steuereinrichtung 14 zugeordnet, die zur Beaufschlagung der die Gleishebeeinrichtung 11 relativ zum Maschinenrahmen 8 verlagernden Antriebe 10 ausgebildet ist.

Alternativ können beide Signalempfänger 12, 13 aber auch direkt am Maschinenrahmen 8 bzw. wie in Fig. 2 ersichtlich, auf einer Fahrkabine 15 angeordnet sein. Ebenso kann als weitere Variante der Erfindung auch ein unmittelbar hinter der Gleishebeeinrichtung 11 angeordneter - zur Positionsbestimmung in einem globalen Navigationssatellitensystem geeigneter - dritter Signalempfänger 16 zum Abtasten der Gleislage vorgesehen sein.

Es ist eine in einem terrestrischen Koordinatensystem vermessene Referenzstation 17 zweckmäßig, um die Genauigkeit der Positionssignale für die Signalempfänger deutlich zu verbessern.

Zur Empfangsoptimierung der Satellitensignale ist es von Vorteil, den Signalempfänger 12, 13, 16, wie in Fig. 2 dargestellt, auf der Fahrkabine 15 anzuordnen. Allerdings muss in diesem Fall eine mit einem Querneigungsmesser 18 verbundene Ausgleichsvorrichtung 19 zur Verschiebung des Signalempfängers relativ zur Fahrkabine 15 vorgesehen sein, um durch eine Gleisquerneigung verursachte Positionsänderungen zu kompensieren.

Wie in Fig. 3 dargestellt, kann zur Abtastung der Höhen- und Seitenlage des Gleises 2 auch eine aus zwei Räder 20 gebildete Radachse 21 an den Maschinenrahmen 8 angelenkt sein. Mittig auf der Radachse 21 ist einer der Signalempfänger 12, 13 bzw. 16 befestigt. Dieser kann wahlweise zusätzlich auch mit einer inertialen Messeinheit ausgestattet sein. Alternativ wäre es aber auch möglich, anstelle eines Satellitensystems jeden Signalempfänger lediglich mit einer inertialen Messeinheit zu versehen.

Im folgenden wird das Verfahren zum Arbeitseinsatz der Maschine 1 näher beschrieben. Der erste bzw. vordere Signalempfänger 12 wird durch die Verbindung mit dem Schienenfahrwerk 7 entlang der Höhen- und Seitenposition des Gleises 2 geführt. Dabei wird in kurzen Zeitabständen mit Hilfe der durch die Referenzstation 17 kompensierten Satellitensignale die Höhen- und Seitenposition des Gleises 2 an einem Ort x als Gleis - Istlage registriert. Die entsprechenden Daten werden in der Steuereinrichtung 14 zwischengespeichert und in Abhängigkeit von einer Wegmesseinrichtung 22 zeitversetzt nach Erreichen des Ortes X mit den Positionsdaten des zweiten Signalempfängers 13 verglichen. Anschließend werden die Antriebe 10 der Gleishebeeinrichtung 11 solange beaufschlagt, bis die Positionsdaten des zweiten Signalempfängers 13 mit den gespeicherten Daten des ersten Signalempfängers 12 übereinstimmen und das Gleis 2 in einer Gleis - Solllage zu liegen kommt.

Durch den alternativen Einsatz des dritten Signalempfängers 16 kann direkt mit der Ablage des Gleises 2 auf den abgeworfenen Schotter 4 für eine exakte Positionierung in der Gleis - Solllage eingegriffen werden.

Wenn anstelle eines in Fig. 1 und 2 beschriebenen ersten und zweiten Signalempfängers alternativ eine erste und zweite inertiale Messeinheit verwendet wird, erfolgt die Aufzeichnung der Gleis - Istlage als eine der Gleislage entsprechende Raumkurve. Diese wird im Bereich der zweiten inertialen Messeinheit zur Erzeugung der Gleis - Solllage nachgebildet.

## Patentansprüche

1. Maschine zur Instandhaltung eines Gleises, mit einem auf dem Gleis (2) verfahrbaren Maschinenrahmen (8), einer Aufnahmevorrichtung (3) zur Aufnahme von unterhalb des Gleises (2) befindlichem Schotter (4), sowie mit einer durch Antriebe (10) höhen- und querverstellbaren Gleishebeeinrichtung (11), wobei ein bezüglich einer Arbeitsrichtung (9) vor der genannten Aufnahmevorrichtung (3) mit der Maschine (1) verbundener - zur Positionsbestimmung in einem globalen Navigationssatellitensystem geeigneter - erster Signalempfänger (12) zum Abtasten einer Gleis - Istlage vorgesehen ist, und ein bezüglich der Arbeitsrichtung (9) nachfolgend ein mit der Maschine (1) verbundener - zur Positionsbestimmung in einem globalen Navigationssatellitensystem geeigneter - zweiter Signalempfänger (13) zum Abtasten einer - unter Ablage des angehobenen Gleises (2) auf den wieder eingebrachten Schotter (4) geschaffenen - Gleisneulage angeordnet ist, **dadurch gekennzeichnet, dass** beiden Signalempfängern (12, 13) eine Steuereinrichtung (14) zugeordnet ist, die zur Beaufschlagung der die Gleishebeeinrichtung (11) relativ zum Maschinenrahmen (8) verlagernden Antriebe (10) ausgebildet ist.

2. Maschine nach Anspruch 1, **dadurch gekennzeichnet, dass** ein Signalempfänger (16) zur Abtastung des Gleises (2) bezüglich der Arbeitsrichtung (9) hinter der Gleishebeeinrichtung (11) angeordnet ist.

3. Maschine nach Anspruch 1, **dadurch gekennzeichnet, dass** beide Signalempfänger (12, 13) jeweils auf einem vorderen bzw. hinteren Schienenfahrwerk (7) angeordnet sind.

4. Maschine nach Anspruch 2, **dadurch gekennzeichnet, dass** der hintere Signalempfänger (16) mit der Gleishebeeinrichtung (11) verbunden ist.

5. Maschine nach Anspruch 1, **dadurch gekennzeichnet, dass** beide Signalempfänger (12, 13) jeweils auf dem vorderen bzw. hinteren Ende des Maschinenrahmens (8) angeordnet sind, wobei jedem Signalempfänger (12, 13) eine mit einem Querneigungsmesser (18) verbundene Ausgleichsvorrichtung (19) für eine Positionskorrektur in Bezug auf das darunterliegende Schienenfahrwerk (7) zugeordnet ist.

6. Maschine nach Anspruch 1, **dadurch gekennzeichnet, dass** beiden Signalempfängern (12, 13) eine in einem terrestrischen Koordinatensystem bekannte, dem aufzumessenden Gleisabschnitt benachbarte, örtlich fest installierte Referenzstation (17) zugeordnet ist.

7. Maschine zur Instandhaltung eines Gleises, mit einem auf dem Gleis (2) verfahrbaren Maschinenrahmen (8), einer Aufnahmevorrichtung (3) zur Aufnahme von unterhalb des Gleises (2) befindlichem Schotter (4), sowie mit einer durch Antriebe (10) höhen- und querverstellbaren Gleishebeeinrichtung (11), **gekennzeichnet durch** folgende Merkmale:
a) es ist eine bezüglich einer Arbeitsrichtung (9) vor der genannten Aufnahmevorrichtung (3) mit der Maschine (1) verbundener, als inertiale Messeinheit zum Abtasten einer Gleis - Istlage ausgebildeter erster Signalempfänger (12) vorgesehen,
b) bezüglich der Arbeitsrichtung (9) nachfolgend ist ein mit der Maschine (1) verbundener, als inertiale Messeinheit zum Abtasten einer - unter Ablage des angehobenen Gleises (2) auf den wieder eingebrachten Schotter (4) geschaffenen - Gleisneulage ausgebildeter zweiter Signalempfänger (13) angeordnet,
c) beiden inertialen Messeinheiten ist eine Steuereinrichtung (14) zugeordnet, die zur Beaufschlagung der die Gleishebeeinrichtung (11) relativ zum Maschinenrahmen (8) verlagernden Antriebe (10) ausgebildet ist.

8. Maschine nach Anspruch 7, **dadurch gekennzeichnet, dass** wenigstens einer inertialen Messeinheit ein zur Positionsbestimmung in einem globalen Navigationssatellitensystem geeigneter Signalempfänger zugeordnet ist.

## Claims

1. A machine for maintenance of a track, having a machine frame (8) mobile on the track (2), a pick-up device (3) for picking up ballast (4) located underneath the track (2), and a track lifting device (11) vertically and transversely adjustable by means of drives (10), wherein a first signal receiver (12) - suitable for position detection in a global navigation satellite system - connected to the machine (1) in front of the said pick-up device (3) with regard to a working direction (9) is provided for tracing an existing track position, and a second signal receiver (13) - suitable for position detection in a global navigation satellite system and connected to the machine (1) - for tracing a new track position created by placing the raised track (2) upon the reintroduced ballast (4) is arranged following with regard to the working direction (9), **characterized in that** associated with both signal receivers (12, 13) is a control device (14) designed for actuation of the drives (10) which shift the track lifting device (11) relative to the machine frame (8).

2. A machine according to claim 1, **characterized in that** a signal receiver (16) for tracing the track (2) is arranged to the rear of the track lifting device (11) with regard to the working direction (9).

3. A machine according to claim 1, **characterized in that** both signal receivers (12, 13) are arranged on a front or rear on-track undercarriage (7), respectively.

4. A machine according to claim 2, **characterized in that** the rear signal receiver (16) is connected to the track lifting device (11).

5. A machine according to claim 1, **characterized in that** both signal receivers (12, 13) are arranged on the front or rear end, respectively, of the machine frame (8), wherein a compensation device (19) connected to a transverse inclination meter (18) is associated with each signal receiver (12, 13) for a position correction with regard to the on-track undercarriage (7) situated thereunder.

6. A machine according to claim 1, **characterized in that** a reference station (17), installed at a fixed location adjacent to the track section to be surveyed, is associated with both signal receivers (12, 13), the reference station (17) being known in a terrestrial coordinate system.

7. A machine for maintenance of a track, having a machine frame (8) mobile on the track (2), a pick-up device (3) for picking up ballast (4) located underneath the track (2), and a track lifting device (11) vertically and transversely adjustable by means of drives (10), **characterized by** the following features:
a) a first signal receiver (12) designed as an inertial measuring unit for tracing an existing track position is provided which is connected to the machine (1) in front of the said pick-up device (3) with regard to a working direction (9),
b) a second signal receiver (13) connected to the machine (1) and designed as an inertial measuring unit for tracing a new track position created by placing the raised track (2) upon the reintroduced ballast (4) is arranged following with regard to the working direction (9),
c) associated with both inertial measuring units is a control device (14) designed for actuation of the drives (10) which shift the track lifting device (11) relative to the machine frame (8).

8. A machine according to claim 7, **characterized in that** a signal receiver suitable for position detection in a global navigation satellite system is associated with at least one inertial measuring unit.

## Revendications

1. Machine de maintenance d'une voie ferrée, avec un châssis de machine (8) pouvant être déplacé sur la voie ferrée (2), un dispositif de réception (3) pour la réception de ballast (4) se trouvant en dessous de la voie ferrée (2), ainsi qu'avec un dispositif de levage de voie (11) réglable en hauteur et de manière transversale par des entraînements (10), dans laquelle un premier récepteur de signal (12) relié à la machine (1) avant ledit dispositif de réception (3) par rapport à un sens de travail (9), convenant à la détermination de position dans un système de navigation par satellite global est prévu pour le balayage d'une position réelle de voie, et un second récepteur de signal (13) relié à la suite à la machine (1) par rapport au sens de travail (9), convenant à la détermination de position dans un système de navigation par satellite global, est disposé pour le balayage d'une nouvelle position de voie créée en déposant la voie soulevée (2) sur le ballast (4) de nouveau introduit, **caractérisée en ce qu'**un dispositif de commande (14) est associé aux deux récepteurs de signal (12, 13), lequel est réalisé pour la sollicitation des entraînements (10) déplaçant le dispositif de levage de voie (11) par rapport au châssis de machine (8).

2. Machine selon la revendication 1, **caractérisée en ce qu'**un récepteur de signal (16) pour le balayage de la voie ferrée (2) par rapport au sens de travail (9) est disposé derrière le dispositif de levage de voie (11).

3. Machine selon la revendication 1, **caractérisée en ce que** les deux récepteurs de signal (12, 13) sont chacun disposés sur un mécanisme de roulement ferroviaire avant ou arrière (7).

4. Machine selon la revendication 2, **caractérisée en ce que** le récepteur de signal arrière (16) est relié au dispositif de levage de voie (11).

5. Machine selon la revendication 1, **caractérisée en ce que** les deux récepteurs de signal (12, 13) sont chacun disposés sur l'extrémité avant ou arrière du châssis de machine (8), dans laquelle un dispositif de compensation (19) relié à un dispositif de mesure d'inclinaison transversale (18) est associé à chaque récepteur de signal (12, 13) pour une correction de position par rapport au mécanisme de roulement ferroviaire sous-jacent (7).

6. Machine selon la revendication 1, **caractérisée en ce qu'**une station de référence (17) connue dans un système de coordonnées terrestres, voisine de la section de voie à mesurer, installée de manière fixe localement est associée aux deux récepteurs de signal (12, 13).

7. Machine de maintenance d'une voie ferrée, avec un châssis de machine (8) pouvant être déplacé sur la voie ferrée (2), un dispositif de réception (3) pour la réception de ballast (4) se trouvant en dessous de la voie ferrée (2), ainsi qu'avec un dispositif de levage de voie (11) réglable en hauteur et de manière transversale par des entraînements (10), **caractérisée par** les caractéristiques suivantes :
a) il est prévu un premier récepteur de signal (12) relié à la machine (1) avant ledit dispositif de réception (3) par rapport à un sens de travail (9), réalisé en tant que module de mesure inertiel pour le balayage d'une position réelle de voie,
b) un second récepteur de signal (13) relié à la machine (1), réalisé en tant que module de mesure inertiel pour le balayage d'une nouvelle position de voie créée en déposant la voie soulevée (2) sur le ballast (4) de nouveau introduit est disposé à la suite par rapport au sens de travail (9),
c) un dispositif de commande (14) est associé aux deux modules de mesure inertiels, lequel est réalisé pour la sollicitation des entraînements (10) déplaçant le dispositif de levage de voie (11) par rapport au châssis de machine (8).

8. Machine selon la revendication 7, **caractérisée en ce qu'**un récepteur de signal convenant à la détermination de position dans un système de navigation par satellite global est associé à au moins un module de mesure inertiel.
